# EUROPEAN PATENT SPECIFICATION

(11) **EP 3 249 485 B1**
(45) Date of publication and mention of the grant of the patent: **17.08.2022**
(21) Application number: 16171489.4
(22) Date of filing: 26.05.2016
(51) Int. Cl.: G05B 23/02

(54) **A METHOD FOR INDICATING A NEED FOR MAINTENANCE OF AN ELECTRIC DRIVE APPARATUS, AND AN ELECTRIC DRIVE APPARATUS**
VERFAHREN ZUR ANZEIGE DER NOTWENDIGKEIT DER WARTUNG EINER ELEKTRISCHEN ANTRIEBSVORRICHTUNG SOWIE ELEKTRISCHE ANTRIEBSVORRICHTUNG
PROCÉDÉ POUR INDIQUER UN BESOIN DE MAINTENANCE D'UN APPAREIL À COMMANDE ÉLECTRIQUE ET APPAREIL À COMMANDE ÉLECTRIQUE

(43) Date of publication of application: 29.11.2017
(73) Proprietor: ABB Schweiz AG, 5400 Baden (CH)
(72) Inventor: Alamäki, Juha, 00380 Helsinki (FI); Särkimäki, Ville, 00380 Helsinki (FI); Alkkiomäki, Olli, 00380 Helsinki (FI)
(74) Representative: Kolster Oy Ab

(56) References cited:
- EP-A2- 1 519 255
- US-A1- 2015 106 058

## Description

### FIELD OF THE INVENTION

The present invention relates to the field of testing and maintenance of electric automation devices, such as testing and maintenance of electric drive apparatuses and to the field of electric drives used for industrial applications, such as for applications within the transportation industry, energy industry, process industry and manufacturing industry, and more particularly to a method for indicating a need for maintenance of an electric drive apparatus and to an electric drive apparatus.

### BACKGROUND OF THE INVENTION

Electric drives are used in industry for different applications, such as for driving motors within the transportation industry, for driving different devices within the process and manufacturing industry as well as within the energy industry. There are applications commonly used for electric drives within the transportation industry for example in metro and railway traffic applications as well as in ship propulsion unit applications of the marine industry. Within the process and manufacturing industry, electric drives can be used for example in conveyer applications, in mixer applications or even in paper machine applications. Within the energy industry, electric drives can be used for example as electric drives for wind turbines of the wind power industry and as electric drives of the solar power industry.

Electric drives for electric motors may be divided into DC motor drives (DC, direct current) and AC drives (AC, alternating current). In a DC motor of a DC motor drive, a magnetic field is generated by the current through the field winding in the stator. This magnetic field is always maintained at right angles to the field generated by the armature winding. In this way, a DC motor's torque is generated, which torque can then be easily controlled in a DC motor drive by changing the armature current and keeping the magnetizing current constant. In a DC motor drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor can be controlled, whereas in frequency controlled AC drives the load dictates the torque level.

In the following, prior art will be described with reference to the accompanying figures, of which:
Figure 1 shows a block diagram of an electric drive according to prior art;
Figure 2 shows a block diagram of an arrangement for indicating a need for maintenance of an electric drive apparatus according to prior art;
Figure 3 shows a flow diagram of a method for indicating a need for maintenance of an electric drive apparatus according to prior art;
Figure 4 shows a time schedule diagram of an arrangement for indicating a need for maintenance of an electric drive apparatus in an installation consisting of one or more electric drive apparatuses according to prior art.

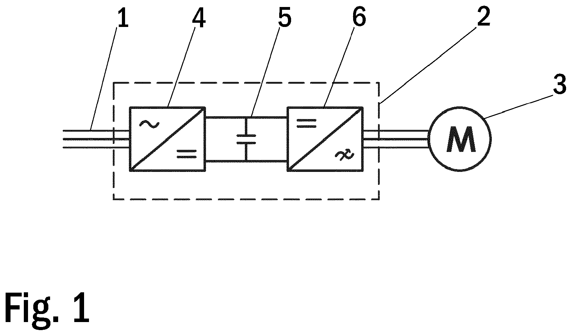

Figure 1 shows a block diagram of an electric drive according to prior art. The electric drive according to prior art comprises an input power feed 1, a frequency controller 2 and a load 3. The load 3 can be for example a motor 3. The frequency controller 2 typically comprises a rectifier unit 4, a fixed DC voltage intermediate circuit 5 and an inverter unit 6. The rectifier unit 4 of the frequency controller 2 converts the AC input power coming from the input power feed 1 into DC intermediate power. The rectifying in the frequency controller 2 can be realised for example with a 6-pulse diode bridge. The DC intermediate power coming from the rectifier unit 4 of the frequency controller 2 is stored in the fixed DC voltage intermediate circuit 5 acting as intermediate energy storage. The fixed DC voltage intermediate circuit 5 of the frequency controller 2 can be realised for example with capacitors. The inverter unit 6 of the frequency controller 2 converts the DC power of the fixed DC voltage intermediate circuit 5 into three channels of AC energy at the frequency suited by the motor 3 acting as a load 3. The inverter unit 6 of the frequency controller 2 can be realised for example with IGBT transistors (IGBT, Insulated-gate bipolar transistor).

Electric drives are typically used in very demanding applications. Especially, in most of the applications used, the demand for a reliable operation and for operational efficiency constantly increasing. The operation of an electric drive apparatus depends upon the most optimal configuration, set up and maintenance program. When electric drives are used in an application to drive the load, e.g. a motor, optimally, energy will be saved considerably. On the other hand, when electric drives are not used correctly or are not having the most optimal configuration in an application, energy savings will not be that great.

In a typical electric drive application, there are several subsystems in the electric drive apparatus and in the application setting that may all contribute to reliable operation and to the overall operational efficiency of the electric drive application. For example in Figure 1, the functioning of the rectifier unit 4, the fixed DC voltage intermediate circuit 5 and the inverter unit 6 as subsystems 4 to 6 of the frequency controller 2 as well as the functioning of the input power feed 1 and the load 3 may all contribute to reliable operation and to the overall operational efficiency of the particular electric drive application.

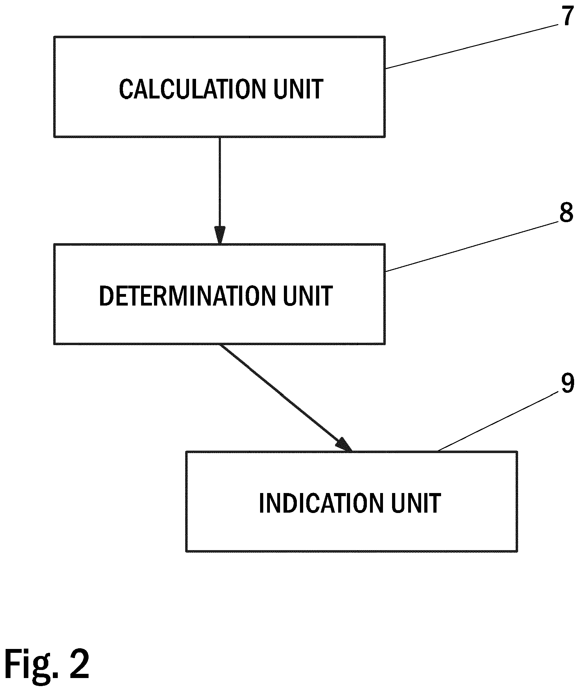

Figure 2 shows a block diagram of an arrangement for indicating a need for maintenance of an electric drive apparatus according to prior art. The arrangement for indicating a need for maintenance of an electric drive apparatus, e.g. a frequency converter, according to prior art comprises a calculation unit 7, a determination unit 8 and an alarm indication unit 9.

First, the calculation unit 7 of the electric drive apparatus collects and receives maintenance data, i.e. data relevant to the maintenance of the electric drive. The maintenance data may be collected and received from the various subsystems in the electric drive apparatus and in the application setting, these including electric drive subsystems, the input power feed and the load. Thereafter, the calculation unit 7 of the electric drive apparatus calculates maintenance algorithms of the electric drive apparatus according to prior art. The calculation unit 7 then forwards the maintenance calculation data to the determination unit 8.

The determination unit 8 of the electric drive apparatus analyses the collected and calculated maintenance data together with the applicable values set for maintenance scheme of the electric drive apparatus and determines a maintenance alarm for maintenance of the electric drive apparatus. The determination unit 8 then forwards the information of the determined maintenance alarm to the alarm indication unit 9.

The alarm indication unit 9 receives the information of the determined maintenance alarm from the determination unit 8. The said information of the maintenance alarm may for example inform about a need to change a cooling fan of the electric drive apparatus. The alarm indication unit 9 then indicates the maintenance alarm of the electric drive apparatus to the user by for example showing the alarm on a display panel of the electric drive apparatus.

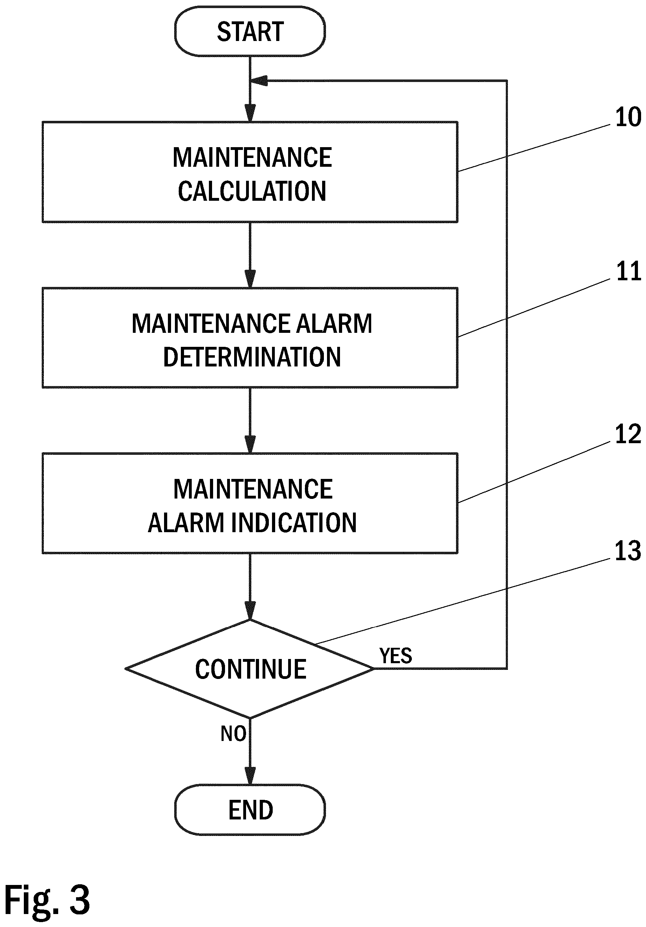

Figure 3 shows a flow diagram of a method for indicating a need for maintenance of an electric drive apparatus according to prior art. In the method for indicating a need for maintenance of an electric drive apparatus, e.g. a frequency converter, according to prior art, the calculation unit 7 of the electric drive apparatus first collects and receives maintenance data, i.e. data relevant to the maintenance of the electric drive apparatus, and calculates 10 maintenance calculation data using maintenance algorithms of the electric drive apparatus according to prior art. The calculation unit 7 then forwards the calculated maintenance calculation data to a determination unit 8.

In the method for indicating a need for maintenance of an electric drive apparatus according to prior art, the determination unit 8 analyses the collected and calculated maintenance data together with the applicable values set for maintenance scheme of the electric drive apparatus and determines 11 a maintenance alarm for maintenance of the electric drive apparatus. The determination unit 8 then forwards the information of the determined maintenance alarm to an alarm indication unit 9.

In the method for indicating a need for maintenance of an electric drive apparatus according to prior art, the alarm indication unit 9 receives the information of the determined maintenance alarm from the determination unit 8. The said information of the maintenance alarm may for example inform about a need to change a cooling fan of the electric drive apparatus. The alarm indication unit 9 then indicates 12 the maintenance alarm of the electric drive apparatus to the user by for example showing the alarm on a display panel of the electric drive apparatus.

In the method for indicating a need for maintenance of an electric drive apparatus according to prior art, the process of calculating 10 maintenance calculation data and determining 11 and indicating 12 a maintenance alarm is repeated continuously and continued 13 until the electric drive apparatus is turned off or until the maintenance alarm indication feature is turned off.

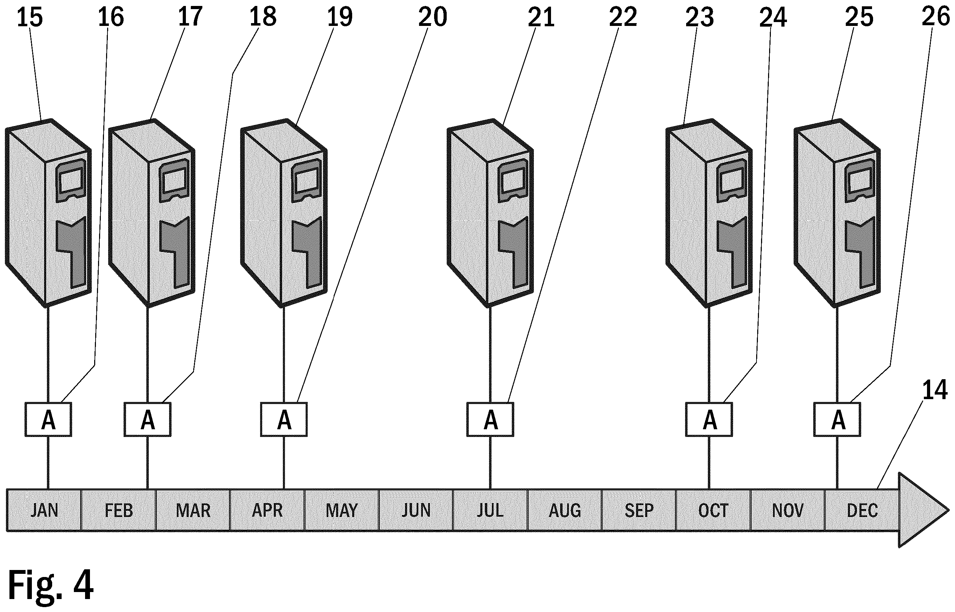

Figure 4 shows a time schedule diagram of an arrangement for indicating a need for maintenance of an electric drive apparatus in an installation consisting of one or more electric drive apparatuses according to prior art. A timeline shown in the time schedule diagram of Figure 4 is marked with a reference number 14. The installation according to prior art comprises several electric drive apparatuses 15, 17, 19, 21, 23, 25. Here, in each one of the said several electric drive apparatuses 15, 17, 19, 21, 23, 25 maintenance data, e.g. time, usage and conditions, is collected, calculated and analysed together with the applicable values set for maintenance scheme of the electric drive apparatus 15,17,19, 21, 23, 25, and a maintenance alarm 16,18, 20, 22, 24, 26 for maintenance of the electric drive apparatus is determined independently based on the analysis.

In the presented installation according to prior art each one of the said several electric drive apparatuses 15, 17, 19, 21, 23, 25 gives a maintenance alarm 16, 18, 20, 22, 24, 26 independently. Electric drive apparatus 15 gives a maintenance alarm 16 in January; electric drive apparatus 17 gives a maintenance alarm 18 in February; electric drive apparatus 19 gives a maintenance alarm 20 in April; electric drive apparatus 21 gives a maintenance alarm 22 in July; electric drive apparatus 23 gives a maintenance alarm 24 in October; and electric drive apparatus 25 gives a maintenance alarm 26 in December.

In the presented installation according to prior art each one of the said several electric drive apparatuses 15, 17, 19, 21, 23, 25 gives a maintenance alarm 16, 18, 20, 22, 24, 26 independently and indicates the information of the maintenance alarm independently to the user by for example showing the alarm on a display panel of the electric drive apparatus 15, 17, 19, 21, 23, 25. Each one of the electric drive apparatuses 15, 17, 19, 21, 23, 25 is maintained separately.

A proper and timely maintenance of the electric drive apparatuses 15, 17, 19, 21, 23, 25 is very important and contributes to reliable operation and to the overall operational efficiency of the electric drive apparatuses 15, 17, 19, 21, 23, 25 and the installation as whole. However, when the installation has several electric drive apparatuses 15, 17, 19, 21, 23, 25, the prior art maintenance solution causes maintenance inefficiency. While one electric drive apparatus is maintained, another electric drive apparatus gives a maintenance alarm causing a new maintenance visit soon after the first one. The solution for indicating a need for maintenance of an electric drive apparatus according to prior art leads to repeated and frequent maintenance visits and causes inefficiency in the installation and in the maintenance.

A prior art US Patent Application Publication US 2015/0106058 A1 discloses a prior art solution in power production side for improving reliability operations of a heat recovery steam generator (HRSG) and its components. There is presented a solution disclosing a centralized model-based reliability system (MRS) having a model library and a dynamic risk calculation engine (DRCE). The disclosed solution is used for conventional centralized maintenance operations planning according to prior art.

Many maintenance visits cause disturbances in the operation and cause inefficiency in the installation and in the maintenance. In today's demanding environment, the installation user having several electrical drive apparatuses in an installation would like to have a maintenance solution which would be more efficient than the current prior art maintenance solutions. Consequently, there is a need for a more efficient solution for a method for indicating a need for maintenance of an electric drive apparatus and for a solution for an electric drive apparatus that can be more efficiently maintained. There is a demand in the market for a method for indicating a need for maintenance of an electric drive apparatus as well as for electric drive apparatuses that would be more efficient than the current prior art solutions.

### BRIEF DESCRIPTION OF THE INVENTION

An object of the present invention is thus to provide a method and an apparatus for implementing the method so as to overcome the above problems and to alleviate the above disadvantages.

The objects of the invention are achieved by a method for indicating a need for maintenance of an electric drive apparatus of an installation consisting of two or more electric drive apparatuses, the method being adapted to be executed in one electric drive apparatus of the installation consisting of two or more electric drive apparatuses, which method comprises the steps of:
- collecting maintenance data relevant to the maintenance of said electric drive apparatus,
- determining a need for maintenance of said electric drive apparatus by analysing the collected maintenance data together with applicable values set for a maintenance scheme of said electric drive apparatus,
- sending by said electric drive apparatus information of the need for maintenance to other electric drive apparatus/apparatuses of said installation,
- receiving in said electric drive apparatus information on the need for maintenance of said other electric drive apparatus/apparatuses,
- generating by said electric drive apparatus a synchronized maintenance alarm of two or more electric drive apparatuses, and
- indicating by said electric drive apparatus said synchronized maintenance alarm to the user.

Preferably, after the step of generating a synchronized maintenance alarm, the information of the generated synchronized maintenance alarm is sent to other electric drive apparatuses of the installation. Preferably, the said synchronized maintenance alarm comprises the information of the need of maintenance of only one electric drive apparatus of the one or more electric drive apparatuses in the installation.

Preferably, in the step of indicating, said synchronized maintenance alarm is indicated to the user by showing said synchronized maintenance alarm on a display panel of at least one electric drive apparatus of said one or more electric drive apparatuses. Alternatively, in the step of indicating, said synchronized maintenance alarm is indicated to the user with a light indication of a particular selected colour.

Furthermore, the objects of the invention are achieved by an electric drive apparatus adapted to be used in an installation consisting of two or more electric drive apparatuses which said electric drive apparatus has:
- a calculation unit for collecting maintenance data relevant to the maintenance of said electric drive apparatus,
- a maintenance need notification unit for determining a need for maintenance of said electric drive apparatus by analysing the collected maintenance data together with applicable values set for a maintenance scheme of said electric drive apparatus,
- a communication unit comprising:
   - a transmitter for sending information of the need for maintenance to other electric drive apparatus/apparatuses of said installation, and
   - a receiver for receiving information on the need for maintenance of said other electric drive apparatus/apparatuses,
- a maintenance alarm synchronization unit for generating a synchronized maintenance alarm of two or more electric drive apparatuses, and
- an alarm indication unit for indicating said synchronized maintenance alarm to the user.

Preferably, the maintenance alarm synchronization unit forwards the information of the generated synchronized maintenance alarm to the communication unit for communicating said generated synchronized maintenance alarm to other electric drive apparatuses of the installation. Preferably, said synchronized maintenance alarm comprises the information of the need of maintenance of only one electric drive apparatus of the one or more electric drive apparatuses in the installation.

Preferably, said synchronized maintenance alarm is indicated to the user by showing said synchronized maintenance alarm on a display panel of at least one electric drive apparatus of said one or more electric drive apparatuses. Alternatively, said synchronized maintenance alarm is indicated to the user with a light indication of a particular selected colour.

Preferably, two or more or all of the units, i.e. data collection unit, a maintenance need notification unit, a communication unit, a maintenance alarm synchronization unit and an alarm indication unit, of the electric drive apparatus are combined as one unit.

Preferably, said transmitter and said receiver utilise a wireless communication protocol. Preferably, there is a synchronization algorithm utilized in said maintenance alarm synchronization unit.

Preferably, said electric drive apparatus is a frequency converter.

### BRIEF DESCRIPTION OF THE DRAWINGS

Figure 1 shows a block diagram of an electric drive according to prior art;
Figure 2 shows a block diagram of an arrangement for indicating a need for maintenance of an electric drive apparatus according to prior art;
Figure 3 shows a flow diagram of a method for indicating a need for maintenance of an electric drive apparatus according to prior art;
Figure 4 shows a time schedule diagram of an arrangement for indicating a need for maintenance of an electric drive apparatus in an installation consisting of one or more electric drive apparatuses according to prior art;

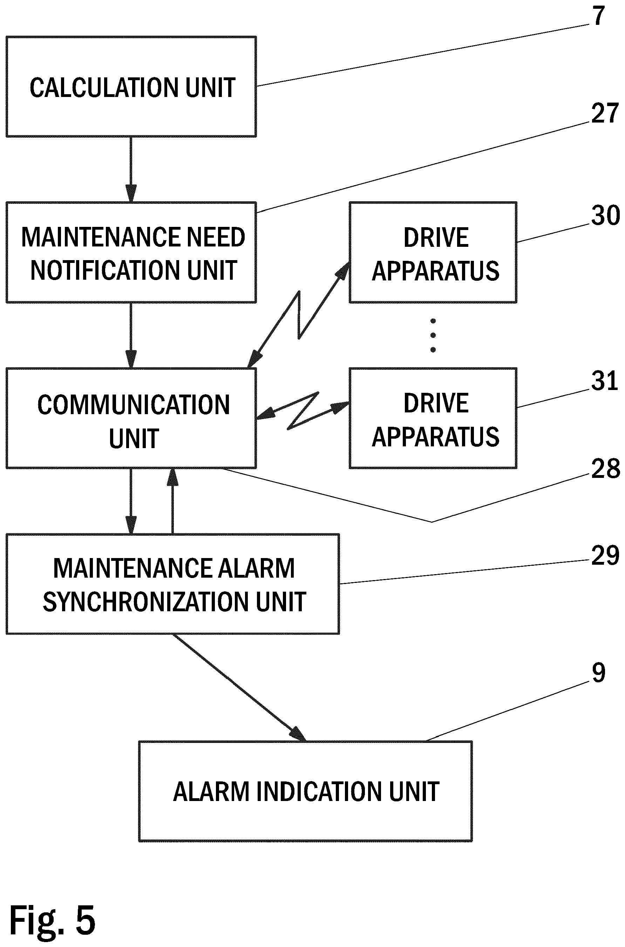

Figure 5 shows a block diagram of an arrangement for indicating a need for maintenance of an electric drive apparatus according to the present invention;

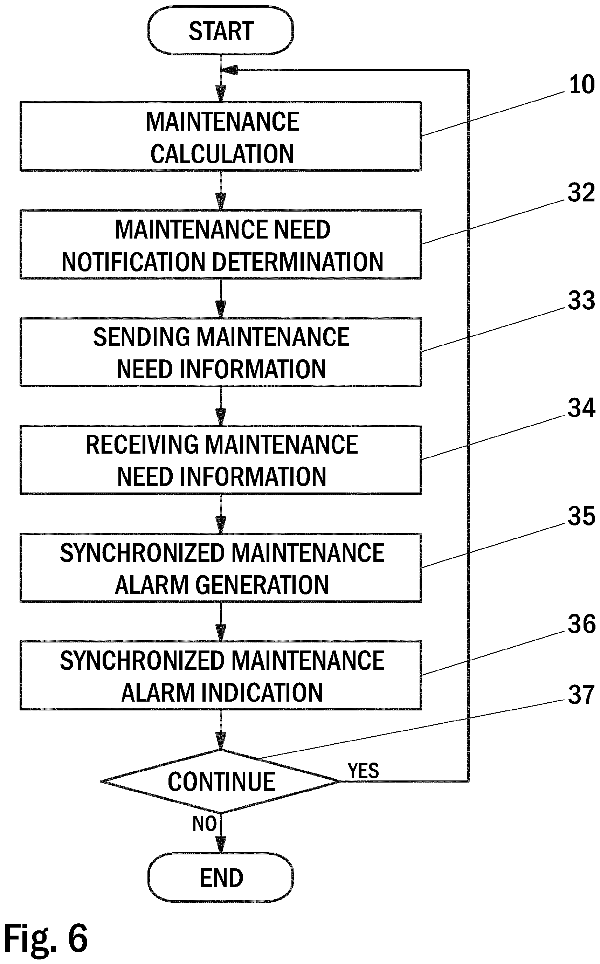

Figure 6 shows a flow diagram of a method for indicating a need for maintenance of an electric drive apparatus according to the present invention;

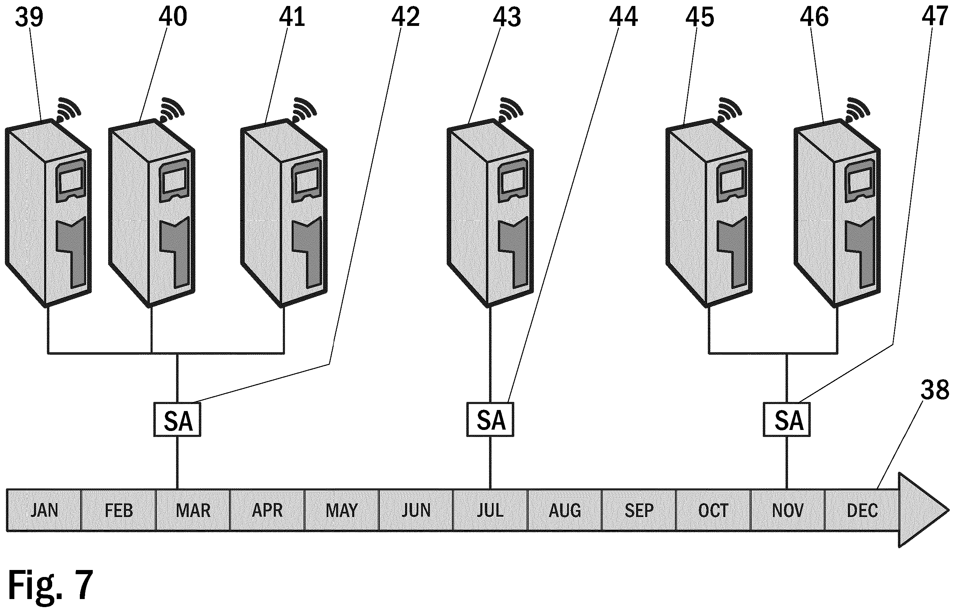

Figure 7 shows a time schedule diagram of an arrangement for indicating a need for maintenance of an electric drive apparatus in an installation consisting of one or more electric drive apparatuses according to the present invention.

Prior art drawings of Figures 1 to 4 have been presented earlier. In the following, the invention will be described in greater detail by means of preferred embodiments with reference to the accompanying drawings of Figures 5 to 7.

### DETAILED DESCRIPTION OF THE INVENTION

Figure 5 shows a shows a block diagram of an arrangement for indicating a need for maintenance of an electric drive apparatus according to the present invention. The electric drive apparatus according to the present embodiment is one electric drive apparatus of an installation consisting of one or more electric drive apparatuses. In regard to the need for maintenance indication arrangement, the electric drive apparatus according to the present invention has a calculation unit 7, a maintenance need notification unit 27, a communication unit 28, a maintenance alarm synchronization unit 29 and an alarm indication unit 9. The installation according to the present invention may consist of two or more electric drive apparatuses.

First, the calculation unit 7 of the electric drive apparatus collects and receives maintenance data, i.e. data relevant to the maintenance of the electric drive apparatus. The maintenance data may be collected and received from the various subsystems in the electric drive apparatus and in the application setting, these including electric drive subsystems, the input power feed and the load. The calculation unit 7 of the electric drive apparatus according to the present invention may also be used for collecting and receiving data for other purposes than for collecting the maintenance data.

Thereafter, the calculation unit 7 of the electric drive apparatus calculates maintenance algorithms of the electric drive apparatus according to present invention. The maintenance algorithms inform users about incoming maintenance actions. The calculation unit 7 then forwards the maintenance calculation data to the maintenance need notification unit 27. Alternatively, the calculation unit 7 stores the maintenance data to memory storage from which the maintenance need notification unit 27 can access the maintenance data. The calculation unit 7 may edit or further process the collected maintenance data before forwarding the maintenance data to the maintenance need notification unit 27 or storing the maintenance data to the memory storage.

The maintenance need notification unit 27 of the electric drive apparatus analyses the collected and calculated maintenance data together with the applicable values set for maintenance scheme of the electric drive apparatus and determines a notification of a need for maintenance of the electric drive apparatus. Because the changes in the electric drive apparatus and in its subsystems as well as the changes in the application setting may substantially contribute to the need for maintenance of the electric drive application, all relevant collected maintenance data is considered in the determination process. The electric drive apparatus according to the present invention may be provided with a possibility to update the previously set applicable values for maintenance scheme of the electric drive apparatus. The maintenance need notification unit 27 then notifies of a need for maintenance of the electric drive apparatus and forwards this notification to the communication unit 28.

The communication unit 28 receives the notification of a need for maintenance from the maintenance need notification unit 27. The said information of the need for maintenance may for example inform about a need to change a cooling fan of the electric drive apparatus. The communication unit 28 of the electric drive apparatus according to the present embodiment comprises a transmitter for sending information to and a receiver for receiving information from other electric drive apparatuses 30, 31 of the installation consisting of one or more electric drive apparatuses.

In the present embodiment the communication unit 28 of the electric drive apparatus then communicates with, i.e. sends information to and receives information from other electric drive apparatuses 30, 31 of the installation. The communication unit 28 of the electric drive apparatus sends information of the need for maintenance, e.g. the said notification of a need for maintenance, of the present electric drive apparatus to the said other electric drive apparatuses 30, 31. The communication unit 28 of the electric drive apparatus also receives information on the need for maintenance of the said other electric drive apparatuses 30, 31 in the near future. In the present embodiment the near future may be defined as a following period of 18 months, a following period of 12 months, a following period of 6 months or a following period of 3 months. The communication unit 28 and the other electric drive apparatuses 30, 31 may utilise any kind of communication protocol in communication, including a wireless communication protocol. The communication unit 28 then forwards the information of the need for maintenance received from the maintenance need notification unit 27 and the information of the need for maintenance received from the other electric drive apparatuses 30, 31 of the installation to the maintenance alarm synchronization unit 29.

The maintenance alarm synchronization unit 29 receives the information of the need for maintenance from the communication unit 28, analyses the received information of the need for maintenance and generates a synchronized maintenance alarm. The maintenance alarm synchronization unit 29 may use an algorithm for synchronisation of the maintenance and for optimization of the maintenance time of the one or more electric drive apparatuses in the installation. The maintenance algorithms inform users about incoming maintenance actions. The synchronized maintenance alarm comprises the information of the need of maintenance of the one or more electric drive apparatuses in the installation according to the present embodiment. The synchronized maintenance alarm may also comprise the information of the need of maintenance of only one electric drive apparatus of the one or more electric drive apparatuses in the installation according to the present embodiment. The maintenance alarm synchronization unit 29 then forwards the information of the generated synchronized maintenance alarm to the alarm indication unit 9.

The maintenance alarm synchronization unit 29 may also forward the information of the generated synchronized maintenance alarm to the communication unit 28 for communicating said generated synchronized maintenance alarm to other electric drive apparatuses 30, 31 of the installation. The communication unit 28 may then receive and send the information of the generated synchronized maintenance alarm received from the maintenance alarm synchronization unit 29 to other electric drive apparatuses 30, 31 of the installation.

The alarm indication unit 9 receives the information of the generated synchronized maintenance alarm from the maintenance alarm synchronization unit 29. The alarm indication unit 9 then indicates the synchronized maintenance alarm of the one or more electric drive apparatuses to the user by for example showing said synchronized maintenance alarm on a display panel of at least one electric drive apparatus of the said one or more electric drive apparatuses. The alarm indication unit 9 of the electric drive apparatus according to the present invention may also comprise a light arrangement for indicating the generated synchronized maintenance alarm of the one or more electric drive apparatuses in the installation according to the present embodiment to the user with a light indication of a particular selected colour, e.g. red light indication. The alarm indication unit 9 may further have other communicating means based on any known technology, e.g. via a communication network, for properly communicating and indicating the synchronized maintenance alarm of the one or more electric drive apparatuses to the user.

In regard to the need for maintenance indication arrangement, two or more or even all of the units of the electric drive apparatus according to the present invention, i.e. the calculation unit 7, the maintenance need notification unit 27, the communication unit 28, the maintenance alarm synchronization unit 29 and the alarm indication unit 9 may be combined as one unit.

Figure 6 shows a flow diagram of a method for indicating a need for maintenance of an electric drive apparatus according to the present invention. The electric drive apparatus according to the present embodiment is one electric drive apparatus of an installation consisting of one or more electric drive apparatuses. The installation according to the present invention may consist of two or more electric drive apparatuses.

In the method for indicating a need for maintenance of an electric drive apparatus, e.g. a frequency converter, according to the present embodiment, a calculation unit 7 of the electric drive apparatus first collects and receives maintenance data, i.e. data relevant to the maintenance of the electric drive apparatus, and calculates 10 collected maintenance calculation data using maintenance algorithms of the electric drive apparatus according to the present invention. The maintenance algorithms inform users about incoming maintenance actions. The calculation unit 7 then forwards the calculated maintenance calculation data to a maintenance need notification unit 27. Alternatively, the calculation unit 7 may store the maintenance data to memory storage from which the maintenance need notification unit 27 can access the maintenance data. Furthermore, the collected maintenance data may be edited or further processed by the calculation unit 7 before forwarding the maintenance data to the maintenance need notification unit 27 or storing the maintenance data to the memory storage.

After the calculation 10 of the maintenance calculation data the collected and calculated maintenance data is analysed together with the applicable values set for maintenance scheme of the electric drive apparatus and a notification of a need for maintenance of the electric drive apparatus is determined 32 in the maintenance need notification unit 27 of the electric drive apparatus. As the changes in the electric drive apparatus and in its subsystems as well as the changes in the application setting may substantially contribute to the need for maintenance of the electric drive application, all relevant collected maintenance data is considered in the process of determination 32. In the method for indicating a need for maintenance of an electric drive apparatus according to the present invention the electric drive apparatus may be provided with a possibility to update the previously set applicable values for maintenance scheme of the electric drive apparatus. After the notification of a need for maintenance of the electric drive apparatus is determined 32 the maintenance need notification unit 27 then notifies of a need for maintenance of the electric drive apparatus and forwards this notification further to a communication unit 28 of the electric drive apparatus.

After the determination 32 of the notification of a need for maintenance of the electric drive apparatus the following step is the sending 33 of the information of the need for maintenance to other electric drive apparatuses 30, 31 of the installation. The communication unit 28 of the electric drive apparatus sends information of the need for maintenance, e.g. the said notification of a need for maintenance, of the present electric drive apparatus to the said other electric drive apparatuses 30, 31. The communication unit 28 of the electric drive apparatus according to the present embodiment has a transmitter for sending information to and a receiver for receiving information from other electric drive apparatuses 30, 31 of the installation consisting of one or more electric drive apparatuses.

After the sending 33 of the information of the need for maintenance to other electric drive apparatuses 30, 31 of the installation the following step is the receiving 34 of the information on the need for maintenance of the said other electric drive apparatuses 30, 31 in the near future. In the present embodiment the near future may be defined as a following period of 18 months, a following period of 12 months, a following period of 6 months or a following period of 3 months. The communication unit 28 of the electric drive apparatus receives information on the need for maintenance of the said other electric drive apparatuses 30, 31 in the near future. The communication unit 28 and the other electric drive apparatuses 30, 31 may utilise any kind of communication protocol in communication, including a wireless communication protocol. The communication unit 28 then forwards the information of the need for maintenance received from the maintenance need notification unit 27 and the information of the need for maintenance received from the other electric drive apparatuses 30, 31 of the installation to a maintenance alarm synchronization unit 29.

After the receiving 34 of the information on the need for maintenance of the said other electric drive apparatuses 30, 31 the following step is the generating 35 of a synchronized maintenance alarm. The maintenance alarm synchronization unit 29 receives the information of the need for maintenance from the communication unit 28, analyses the received information of the need for maintenance and generates 35 a synchronized maintenance alarm of one or more electric drive apparatuses.

In the generating 35 of a synchronized maintenance alarm the maintenance alarm synchronization unit 29 may use a synchronization algorithm for synchronisation of the maintenance and for optimization of the maintenance time of the one or more electric drive apparatuses in the installation. The maintenance algorithms inform users about incoming maintenance actions. The synchronized maintenance alarm comprises the information of the need of maintenance of the one or more electric drive apparatuses in the installation according to the present embodiment. The synchronized maintenance alarm may also comprise the information of the need of maintenance of only one electric drive apparatus of the one or more electric drive apparatuses in the installation according to the present embodiment. The maintenance alarm synchronization unit 29 then forwards the information of the generated synchronized maintenance alarm to an alarm indication unit 9.

After the generating 35 of the synchronized maintenance alarm the maintenance alarm synchronization unit 29 may also forward the information of the generated synchronized maintenance alarm to the communication unit 28 for communicating said generated synchronized maintenance alarm to other electric drive apparatuses 30, 31 of the installation. The communication unit 28 may then receive and send the information of the generated synchronized maintenance alarm received from the maintenance alarm synchronization unit 29 to other electric drive apparatuses 30, 31 of the installation.

After the generating 35 of the synchronized maintenance alarm the following step is the indicating 36 of the synchronized maintenance alarm of the one or more electric drive apparatuses to the user. In the method for indicating a need for maintenance of an electric drive apparatus according to present embodiment, the alarm indication unit 9 receives the information of the generated synchronized maintenance alarm from the maintenance alarm synchronization unit 29. The alarm indication unit 9 then indicates 36 the synchronized maintenance alarm of the one or more electric drive apparatuses to the user by for example showing said synchronized maintenance alarm on a display panel of at least one electric drive apparatus of the said one or more electric drive apparatuses.

The alarm indication unit 9 of the electric drive apparatus according to the present invention may also comprise a light arrangement for indicating 36 the generated synchronized maintenance alarm of the one or more electric drive apparatuses in the installation according to the present embodiment to the user with a light indication of a particular selected colour, e.g. red light indication. The alarm indication unit 9 may further have other communicating means based on any known technology, e.g. via a communication network, for properly communicating and indicating 36 the synchronized maintenance alarm of the one or more electric drive apparatuses to the user.

In the method for indicating a need for maintenance of an electric drive apparatus according to the present invention, the process of calculating 10 maintenance calculation data, determining 32 the notification of a need for maintenance, sending 33 of the information of the need for maintenance to other electric drive apparatuses 30, 31 of the installation, receiving 34 of the information on the need for maintenance of the said other electric drive apparatuses 30, 31 of the installation, generating 35 of the synchronized maintenance alarm, and indicating 36 of the synchronized maintenance alarm of the one or more electric drive apparatuses to the user is repeated continuously and continued 37 until the electric drive apparatus is turned off or until the maintenance alarm indication feature is turned off.

Figure 7 shows a time schedule diagram of an arrangement for indicating a need for maintenance of an electric drive apparatus in an installation consisting of one or more electric drive apparatuses according to the present invention. A timeline shown in the time schedule diagram of Figure 7 is marked with a reference number 38. The installation according to present embodiment comprises several electric drive apparatuses 39, 40, 41, 43, 45, 46. Here, in each one of the said several electric drive apparatuses 39, 40, 41, 43, 45, 46 maintenance data, e.g. time, usage and conditions, is collected and calculated. Furthermore, in each one of the said several electric drive apparatuses 39, 40, 41, 43, 45, 46 the collected and calculated maintenance data is analysed together with the applicable values set for maintenance scheme of the said electric drive apparatus and a notification of a need for maintenance of the said electric drive apparatus is determined independently based on the analysis.

In the present embodiment, each one of the said several electric drive apparatuses 39, 40, 41, 43, 45, 46 has a transmitter for sending information to and a receiver for receiving information from other electric drive apparatuses 39, 40, 41, 43, 45, 46 of the installation consisting of one or more electric drive apparatuses. The said transmitter of the electric drive apparatus sends information of the need for maintenance, e.g. the said notification of a need for maintenance, of the present electric drive apparatus to the said other electric drive apparatuses 39, 40, 41, 43, 45, 46. Respectively, the said receiver of the electric drive apparatus receives information on the need for maintenance of the said other electric drive apparatuses 39, 40, 41, 43, 45, 46 in the near future. The said transmitter and the said receiver of the electric drive apparatuses 39, 40, 41, 43, 45, 46 may utilise any kind of communication protocol, including a wireless communication protocol.

In the present embodiment, at least one of the said several electric drive apparatuses 39, 40, 41, 43, 45, 46 has determined the information of the need for maintenance of the electric drive apparatus 39, 40, 41, 43, 45, 46 itself and has received and the information of the need for maintenance received from the other electric drive apparatuses 39, 40, 41, 43, 45, 46 of the installation, analyses the determined the information of the need for maintenance of the electric drive apparatus 39, 40, 41, 43, 45, 46 itself together with the received information of the need for maintenance received from the other electric drive apparatuses 39, 40, 41, 43, 45, 46 and generates a synchronized maintenance alarm 42, 44, 47 for maintenance of the electric drive apparatuses 39, 40, 41, 43, 45, 46.

In the present embodiment, the said at least one of the said several electric drive apparatuses 39, 40, 41, 43, 45, 46 may also send the information of the generated synchronized maintenance alarm to the other electric drive apparatuses 39, 40, 41, 43, 45, 46 of the installation. In the presented installation according to present embodiment the said several electric drive apparatuses 39, 40, 41, 43, 45, 46 give a synchronized maintenance alarm 42, 44, 47 in synchronisation with each other. In the said maintenance alarm synchronization unit 29 there is a synchronization algorithm utilized. The electric drive apparatuses 39, 40, 41, 43, 45, 46 of the installation are communicating with each other and a synchronization algorithm adjusts a simultaneous synchronized maintenance alarm on group of electric drive apparatuses which maintenance is due at approximately same calendar time.

In the presented installation according to present embodiment the electric drive apparatuses 39, 40, 41 give a synchronized maintenance alarm 42 in March; electric drive apparatus 43 gives a synchronized maintenance alarm 44 in July; and electric drive apparatuses 45, 46 give a synchronized maintenance alarm 47 in November. The synchronized maintenance alarm 42, 44, 47 comprises the information of the need of maintenance of the one or more electric drive apparatuses 39, 40, 41, 43, 45, 46 in the installation according to the present embodiment. The synchronized maintenance alarm 44 may also comprise the information of the need of maintenance of only one electric drive apparatus 43 of the one or more electric drive apparatuses 39, 40, 41, 43, 45, 46 in the installation according to the present embodiment.

In the presented installation according to present invention the said several electric drive apparatuses 39, 40, 41, 43, 45, 46 give synchronized maintenance alarms 42, 44, 47 in synchronisation with each other and indicate the information of the synchronized maintenance alarms 42, 44, 47 to the user by for example showing each of the alarms 42, 44, 47 on a display panel of at least one electric drive apparatus of the one or more electric drive apparatuses 39, 40, 41, 43, 45, 46.

The electric drive apparatuses 39, 40, 41, 43, 45, 46 according to the present invention may also comprise a light arrangement for indicating the generated synchronized maintenance alarms 42, 44, 47 of the one or more electric drive apparatuses 39, 40, 41, 43, 45, 46 in the installation according to the present embodiment to the user with a light indication of a particular selected colour, e.g. red light indication. The electric drive apparatuses 39, 40, 41, 43, 45, 46 may further have other communicating means based on any known technology, e.g. via a communication network, for properly communicating and indicating 36 the synchronized maintenance alarms 42, 44, 47 of the one or more electric drive apparatuses 39, 40, 41, 43, 45, 46 to the user.

The electric drive apparatuses 39, 40, 41, 43, 45, 46 of the installation according to the present invention are maintained in synchronization and several electric drive apparatuses 39, 40, 41, 43, 45, 46 can be maintained in one maintenance visits instead of each one of the electric drive apparatuses 39, 40, 41, 43, 45, 46 being maintained separately in separate maintenance visits.

The present invention enables a wireless communication and synchronization of alarms and also improves user experience while several electric drive apparatuses 39, 40, 41, 43, 45, 46 can be maintained at once instead of receiving several single service calls. The synchronized maintenance alarms 42, 44, 47 according to the present invention save maintenance costs by grouping maintenance actions and thus causing less maintenance visits to the installation site. A proper, timely and efficient synchronized maintenance of the electric drive apparatuses 39, 40, 41, 43, 45, 46 contributes to reliable and efficient operation and to the overall operational efficiency of the electric drive apparatuses 39, 40, 41, 43, 45, 46 and the installation as whole.

In particular, when the installation has several electric drive apparatuses, the maintenance solution according to the present invention brings about substantial efficiency in maintenance.

With the help of the solution according to the present invention the electric drive apparatuses 39, 40, 41, 43, 45, 46 of the installation can be maintained more efficiently. The synchronized maintenance alarms 42, 44, 47 according to the present invention make it possible to maintain several electric drive apparatuses 39, 40, 41, 43, 45, 46 in one maintenance visit. The solution for indicating a need for maintenance of an electric drive apparatus according to the present invention leads to less maintenance visits and causes inefficiency in the installation brings substantial efficiency in the installation and in the maintenance. The solution according to the present invention may be utilised in e.g. frequency converters or in any electric drive apparatuses.

It will be obvious to a person skilled in the art that, as the technology advances, the inventive concept can be implemented in various ways. The invention and its embodiments are not limited to the examples described above but may vary within the scope of the claims.

## Claims

1. A method for indicating a need for maintenance of an electric drive apparatus of an installation consisting of two or more electric drive apparatuses (30), (31), (39-41), (43), (45), (46), the method being adapted to be executed in one electric drive apparatus (39-41), (43), (45), (46) of the installation consisting of two or more electric drive apparatuses (30), (31), (39-41), (43), (45), (46),
**characterized by** the method comprising the steps of:
- collecting maintenance data relevant to the maintenance of said electric drive apparatus (39-41), (43), (45), (46),
- determining (11) a need for maintenance of said electric drive apparatus by analysing the collected maintenance data together with applicable values set for a maintenance scheme of said electric drive apparatus (39-41), (43), (45), (46),
- sending (33) by said electric drive apparatus (39-41), (43), (45), (46) information of the need for maintenance to other electric drive apparatus/apparatuses (30), (31) of said installation,
- receiving (34) in said electric drive apparatus (39-41), (43), (45), (46) information on the need for maintenance of said other electric drive apparatus/apparatuses (30), (31),
- generating (35) by said electric drive apparatus (39-41), (43), (45), (46) a synchronized maintenance alarm (42), (44), (47) of two or more electric drive apparatuses, and
- indicating (36) by said electric drive apparatus (39-41), (43), (45), (46) said synchronized maintenance alarm (42), (44), (47) to the user.

2. A method according to claim 1, **characterized in that** after the step of generating (35) a synchronized maintenance alarm, the information of the generated synchronized maintenance alarm is sent to other electric drive apparatuses (30), (31) of the installation.

3. A method according to claim 1, **characterized in that** the said synchronized maintenance alarm (44) comprises the information of the need of maintenance of only one electric drive apparatus (43) of the one or more electric drive apparatuses (39-41), (43), (45), (46) in the installation.

4. A method according to any one of claims 1 to 3, **characterized in that** in the step of indicating (36), said synchronized maintenance alarm (42), (44), (47) is indicated (36) to the user by showing said synchronized maintenance alarm (42), (44), (47) on a display panel of at least one electric drive apparatus of said one or more electric drive apparatuses.

5. A method according to any one of claims 1 to 3, **characterized in that** in the step of indicating (36), said synchronized maintenance alarm (42), (44), (47) is indicated (36) to the user with a light indication of a particular selected colour.

6. An electric drive apparatus adapted to be used in an installation consisting of two or more electric drive apparatuses (30), (31), (39-41), (43), (45), (46), **characterized in that** said electric drive apparatus (39-41), (43), (45), (46) has:
- a calculation unit (7) for collecting maintenance data relevant to the maintenance of said electric drive apparatus,
- a maintenance need notification unit (27) for determining a need for maintenance of said electric drive apparatus by analysing the collected maintenance data together with applicable values set for a maintenance scheme of said electric drive apparatus (39-41), (43), (45), (46),
- a communication unit (28) comprising:
- a transmitter for sending information of the need for maintenance to other electric drive apparatus/apparatuses (30), (31) of said installation, and
- a receiver for receiving information on the need for maintenance of said other electric drive apparatus/apparatuses (30), (31),
- a maintenance alarm synchronization unit (29) for generating a synchronized maintenance alarm (42), (44), (47) of two or more electric drive apparatuses, and
- an alarm indication unit (9) for indicating said synchronized maintenance alarm to the user.

7. An electric drive apparatus according to claim 6, **characterized in that** the maintenance alarm synchronization unit (29) is adapted to forward the information of the generated synchronized maintenance alarm to the communication unit (28) for communicating said generated synchronized maintenance alarm to other electric drive apparatuses (30), (31) of the installation.

8. An electric drive apparatus according to claim 6, **characterized in that** said synchronized maintenance alarm (44) comprises the information of the need of maintenance of only one electric drive apparatus (43) of the one or more electric drive apparatuses (39-41), (43), (45), (46) in the installation.

9. An electric drive apparatus according to any one of claims 6 to 8, **characterized in that** said synchronized maintenance alarm (42), (44), (47) is indicated (36) to the user by showing said synchronized maintenance alarm (42), (44), (47) on a display panel of at least one electric drive apparatus of said one or more electric drive apparatuses.

10. An electric drive apparatus according to any one of claims 6 to 8, **characterized in that** said synchronized maintenance alarm (42), (44), (47) is indicated (36) to the user with a light indication of a particular selected colour.

11. An electric drive apparatus according to any one of claims 6 to 10, **characterized in that** two or more or all of the units, i.e. data collection unit (7), a maintenance need notification unit (27), a communication unit (28), a maintenance alarm synchronization unit (29) and an alarm indication unit (9), of the electric drive apparatus are combined as one unit.

12. An electric drive apparatus according to any one of claims 6 to 11, **characterized in that** said transmitter and said receiver utilise a wireless communication protocol.

13. An electric drive apparatus according to any one of claims 6 to 12, **characterized in that** there is a synchronization algorithm utilized in said maintenance alarm synchronization unit (29).

14. An electric drive apparatus according to any one of claims 6 to 13, **characterized in that** said electric drive apparatus (30), (31), (39-41), (43), (45), (46) is a frequency converter.

## Patentansprüche

1. Verfahren zum Anzeigen einer Notwendigkeit einer Wartung einer elektrischen Antriebsvorrichtung einer Installation, die aus zwei oder mehr elektrischen Antriebsvorrichtungen (30), (31), (39-41), (43), (45), (46) besteht, wobei das Verfahren geeignet ist, um in einer elektrischen Antriebsvorrichtung (39-41), (43), (45), (46) der Installation ausgeführt zu werden, die aus zwei oder mehr elektrischen Antriebsvorrichtungen (30), (31), (39-41), (43), (45), (46) besteht,
**dadurch gekennzeichnet, dass** das Verfahren die folgenden Schritte umfasst:
- Sammeln von Wartungsdaten, die für die Wartung der elektrischen Antriebsvorrichtung (39-41), (43), (45), (46) relevant sind,
- Ermitteln (11) einer Notwendigkeit für eine Wartung der elektrischen Antriebsvorrichtung, indem die gesammelten Wartungsdaten zusammen mit anwendbaren Werten analysiert werden, die für ein Wartungsschema der elektrischen Antriebsvorrichtung (39-41), (43), (45), (46) eingestellt sind,
- Senden (33) von Informationen der Notwendigkeit für eine Wartung von der elektrischen Antriebsvorrichtung (39-41), (43), (45), (46) an eine/mehrere andere elektrische Antriebsvorrichtung/en (30), (31) der Installation,
- Empfangen (34) in der elektrischen Antriebsvorrichtung (39-41), (43), (45), (46) von Informationen über die Notwendigkeit einer Wartung einer/mehrerer anderer elektrischer Antriebsvorrichtung/en (30), (31),
- Erzeugen (35), durch die elektrische Antriebsvorrichtung (39-41), (43), (45), (46) eines synchronisierten Wartungsalarms (42), (44), (47) von zwei oder mehr elektrischen Antriebsvorrichtungen, und
- Anzeigen (36), durch die elektrische Antriebsvorrichtung (39-41), (43), (45), (46) des synchronisierten Wartungsalarms (42), (44), (47) für den Benutzer.

2. Verfahren nach Anspruch 1, **dadurch gekennzeichnet, dass** nach dem Schritt des Erzeugens (35) eines synchronisierten Wartungsalarms die Informationen des erzeugten synchronisierten Wartungsalarms an andere elektrische Antriebsvorrichtungen (30), (31) der Installation gesendet werden.

3. Verfahren nach Anspruch 1, **dadurch gekennzeichnet, dass** der synchronisierte Wartungsalarm (44) die Informationen der Notwendigkeit einer Wartung von nur einer elektrischen Antriebsvorrichtung (43) der einen oder mehreren elektrischen Antriebsvorrichtungen (39-41), (43), (45), (46) in der Installation umfasst.

4. Verfahren nach einem der Ansprüche 1 bis 3, **dadurch gekennzeichnet, dass** in dem Schritt des Anzeigens (36) der synchronisierte Wartungsalarm (42), (44), (47) dem Benutzer angezeigt wird (36), indem der synchronisierte Wartungsalarm (42), (44), (47) auf einem Anzeigefeld von mindestens einer elektrischen Antriebsvorrichtung der einen oder mehreren elektrischen Antriebsvorrichtungen gezeigt wird.

5. Verfahren nach einem der Ansprüche 1 bis 3, **dadurch gekennzeichnet, dass** in dem Schritt des Anzeigens (36) der synchronisierte Wartungsalarm (42), (44), (47) dem Benutzer mit einer Lichtanzeige in einer speziell ausgewählten Farbe angezeigt wird (36).

6. Elektrische Antriebsvorrichtung, die geeignet ist, um in einer Installation verwendet zu werden, die aus zwei oder mehr elektrischen Antriebsvorrichtungen (30), (31), (39-41), (43), (45), (46) besteht, **dadurch gekennzeichnet, dass** die elektrische Antriebsvorrichtung (39-41), (43), (45), (46) aufweist:
- eine Berechnungseinheit (7) zum Sammeln von Wartungsdaten, die für die Wartung der elektrischen Antriebsvorrichtung relevant sind,
- eine Wartungsnotwendigkeitsmeldeeinheit (27) zum Ermitteln einer Notwendigkeit für eine Wartung der elektrischen Antriebsvorrichtung, indem die gesammelten Wartungsdaten zusammen mit anwendbaren Werten analysiert werden, die für ein Wartungsschema der elektrischen Antriebsvorrichtung (39-41), (43), (45), (46) eingestellt sind,
- eine Kommunikationseinheit (28), die umfasst:
- einen Sender zum Senden von Informationen der Notwendigkeit für eine Wartung an eine/mehrere andere elektrische Antriebsvorrichtung/en (30), (31) der Installation, und
- einen Empfänger zum Empfangen von Informationen über die Notwendigkeit einer Wartung einer/mehrerer anderer elektrischer Antriebsvorrichtung/en (30), (31),
- eine Wartungsalarmsynchronisationseinheit (29) zum Erzeugen eines synchronisierten Wartungsalarms (42), (44), (47) von zwei oder mehr elektrischen Antriebsvorrichtungen, und
- eine Alarmanzeigeeinheit (9) zum Anzeigen des synchronisierten Wartungsalarms für den Benutzer.

7. Elektrische Antriebsvorrichtung nach Anspruch 6, **dadurch gekennzeichnet, dass** die Wartungsalarmsynchronisationseinheit (29) geeignet ist zum Weiterleiten der Informationen des synchronisierten Wartungsalarms zu der Kommunikationseinheit (28), um den erzeugten synchronisierten Wartungsalarm an andere elektrische Antriebsvorrichtungen (30), (31) der Installation zu kommunizieren.

8. Elektrische Antriebsvorrichtung nach Anspruch 6, **dadurch gekennzeichnet, dass** der synchronisierte Wartungsalarm (44) die Informationen der Notwendigkeit einer Wartung von nur einer elektrischen Antriebsvorrichtung (43) der einen oder mehreren elektrischen Antriebsvorrichtungen (39-41), (43), (45), (46) in der Installation umfasst.

9. Elektrisches Antriebsvorrichtung nach einem der Ansprüche 6 bis 8, **dadurch gekennzeichnet, dass** der synchronisierte Wartungsalarm (42), (44), (47) dem Benutzer angezeigt wird (36), indem der synchronisierte Wartungsalarm (42), (44), (47) auf einem Anzeigefeld von mindestens einer elektrischen Antriebsvorrichtung der einen oder mehreren elektrischen Antriebsvorrichtungen gezeigt wird.

10. Elektrisches Antriebsvorrichtung nach einem der Ansprüche 6 bis 8, **dadurch gekennzeichnet, dass** der synchronisierte Wartungsalarm (42), (44), (47) dem Benutzer mit einer Lichtanzeige in einer speziell ausgewählten Farbe angezeigt wird (36).

11. Elektrisches Antriebsvorrichtung nach einem der Ansprüche 6 bis 10, **dadurch gekennzeichnet, dass** zwei oder mehr oder alle der Einheiten, d.h. eine Datensammlereinheit (7), eine Wartungsnotwendigkeitsmeldeeinheit (27), eine Kommunikationseinheit (28), eine Wartungsalarmsynchronisationseinheit (29) und eine Alarmanzeigeeinheit (9) der elektrischen Antriebsvorrichtung als eine Einheit kombiniert sind.

12. Elektrisches Antriebsvorrichtung nach einem der Ansprüche 6 bis 11, **dadurch gekennzeichnet, dass** der Sender und der Empfänger ein drahtloses Kommunikationsprotokoll verwenden.

13. Elektrisches Antriebsvorrichtung nach einem der Ansprüche 6 bis 12, **dadurch gekennzeichnet, dass** ein Synchronisationsalgorithmus vorhanden ist, der in der Wartungsalarmsynchronisationseinheit (29) verwendet wird.

14. Elektrisches Antriebsvorrichtung nach einem der Ansprüche 6 bis 13, **dadurch gekennzeichnet, dass** die elektrische Antriebsvorrichtung (30), (31), (39-41), (43), (45), (46) ein Frequenzumrichter ist.

## Revendications

1. Procédé d'indication d'un besoin de maintenance d'un appareil de commande électrique d'une installation comptant deux ou plusieurs appareils de commande électrique (30), (31), (39-41), (43), (45), (46), le procédé étant conçu pour être exécuté dans un appareil de commande électrique (39-41), (43), (45), (46) de l'installation comptant deux ou plusieurs appareils de commande électrique (30), (31), (39-41), (43), (45), (46), **caractérisé en ce que** le procédé comprend les étapes suivantes :
- la collecte de données de maintenance pertinentes pour la maintenance dudit appareil de commande électrique (39-41), (43), (45), (46),
- la détermination (11) d'un besoin de maintenance dudit appareil de commande électrique en analysant les données de maintenance collectées ainsi que des valeurs applicables définies pour un plan de maintenance dudit appareil de commande électrique (39-41), (43), (45), (46),
- l'envoi (33) par ledit appareil de commande électrique (39-41), (43), (45), (46), d'informations sur le besoin de maintenance d'un autre ou d'autres appareil(s) de commande électrique (30), (31) de ladite installation,
- la réception (34) dans ledit appareil de commande électrique (39-41), (43), (45), (46) d'informations sur le besoin de maintenance dudit ou desdits autre(s) appareil(s) de commande électrique (30), (31),
- la génération (35) par ledit appareil de commande électrique (39-41), (43), (45), (46) d'une alarme de maintenance synchronisée (42), (44), (47) de deux ou plusieurs appareils de commande électrique, et
- l'indication (36) par ledit appareil de commande électrique (39-41), (43), (45), (46) de ladite alarme de maintenance synchronisée (42), (44), (47) à l'utilisateur.

2. Procédé selon la revendication 1, **caractérisé en ce qu'**après l'étape de génération (35) d'une alarme de maintenance synchronisée, les informations de l'alarme de maintenance synchronisée générée sont envoyées à d'autres appareils de commande électrique (30), (31) de l'installation.

3. Procédé selon la revendication 1 , **caractérisé en ce que** ladite alarme de maintenance synchronisée (44) comprend les informations de besoin de maintenance d'un seul appareil de commande électrique (43) des un ou plusieurs appareils de commande électrique (39-41), (43), (45), (46) dans l'installation.

4. Procédé selon l'une quelconque des revendications 1 à 3, **caractérisé en ce que** dans l'étape d'indication (36), ladite alarme de maintenance synchronisée (42), (44), (47) est indiquée (36) à l'utilisateur en montrant ladite alarme de maintenance synchronisée (42), (44), (47) sur un panneau d'affichage d'au moins un appareil de commande électrique desdits un ou plusieurs appareils de commande électrique.

5. Procédé selon l'une quelconque des revendications 1 à 3, **caractérisé en ce que** dans l'étape d'indication (36), ladite alarme de maintenance synchronisée (42), (44), (47) est indiquée (36) à l'utilisateur avec une indication lumineuse d'une couleur sélectionnée particulière.

6. Appareil de commande électrique conçu pour être utilisé dans une installation comptant deux ou plusieurs appareils de commande électrique (30), (31), (39-41), (43), (45), (46), **caractérisé en ce que** ledit appareil de commande électrique (39-41), (43), (45), (46) comporte
- une unité de calcul (7) pour collecter des données de maintenance pertinentes pour la maintenance dudit appareil de commande électrique,
- une unité de notification de besoin de maintenance (27) pour déterminer un besoin de maintenance dudit appareil de commande électrique en analysant les données de maintenance collectées ainsi que des valeurs applicables définies pour un plan de maintenance dudit appareil de commande électrique (39-41), (43), (45), (46),
- une unité de communication (28) comprenant :
- un émetteur pour envoyer des informations du besoin de maintenance à un autre ou d'autres appareil(s) de commande électrique (30), (31) de ladite installation, et
- un récepteur pour recevoir des informations sur le besoin de maintenance dudit ou desdits autre(s) appareil(s) de commande électrique (30), (31),
- une unité de synchronisation d'alarme de maintenance (29) pour générer une alarme de maintenance synchronisée (42), (44), (47) de deux ou plusieurs appareils de commande électrique, et
- une unité d'indication d'alarme (9) pour indiquer ladite alarme de maintenance synchronisée à l'utilisateur.

7. Appareil de commande électrique selon la revendication 6, **caractérisé en ce que** l'unité de synchronisation d'alarme de maintenance (29) est conçue pour transmettre les informations de l'alarme de maintenance synchronisée générée à l'unité de communication (28) pour communiquer ladite alarme de maintenance synchronisée générée à d'autres appareils de commande électrique (30), (31) de l'installation.

8. Appareil de commande électrique selon la revendication 6, **caractérisé en ce que** ladite alarme de maintenance synchronisée (44) comprend les informations de besoin de maintenance d'un seul appareil de commande électrique (43) des un ou plusieurs appareils de commande électrique (39-41), (43), (45), (46) dans l'installation.

9. Appareil de commande électrique selon l'une quelconque des revendications 6 à 8, **caractérisé en ce que** ladite alarme de maintenance synchronisée (42), (44), (47) est indiquée (36) à l'utilisateur en montrant ladite alarme de maintenance synchronisée (42), (44), (47) sur un panneau d'affichage d'au moins un appareil de commande électrique desdits un ou plusieurs appareils de commande électrique.

10. Appareil de commande électrique selon l'une quelconque des revendications 6 à 8, **caractérisé en ce que** ladite alarme de maintenance synchronisée (42), (44), (47) est indiquée (36) à l'utilisateur par une indication lumineuse d'une couleur particulière sélectionnée.

11. Appareil de commande électrique selon l'une quelconque des revendications 6 à 10, **caractérisé en ce que** deux ou plusieurs ou la totalité des unités, c'est-à-dire une unité de collecte de données (7), une unité de notification de besoin de maintenance (27), une unité de communication (28), une unité de synchronisation d'alarme de maintenance (29) et une unité d'indication d'alarme (9), de l'appareil de commande électrique sont combinées en une seule unité.

12. Appareil de commande électrique selon l'une quelconque des revendications 6 à 11, **caractérisé en ce que** ledit émetteur et ledit récepteur utilisent un protocole de communication sans fil.

13. Appareil de commande électrique selon l'une quelconque des revendications 6 à 12, **caractérisé en ce qu'**un algorithme de synchronisation est utilisé dans ladite unité de synchronisation d'alarme de maintenance (29).

14. Appareil de commande électrique selon l'une quelconque des revendications 6 à 13, **caractérisé en ce que** ledit appareil de commande électrique (30), (31), (39-41), (43), (45), (46) est un convertisseur de fréquence.
